# EUROPÄISCHE PATENTSCHRIFT

(11) **EP 3 020 522 B1**
(45) Veröffentlichungstag und Bekanntmachung des Hinweises auf die Patenterteilung: **22.04.2020**
(21) Anmeldenummer: 15002917.1
(22) Anmeldetag: 13.10.2015
(51) Int. Cl.: B27C 5/06, B27C 5/04, B23Q 3/00, B27C 1/12

(54) **ANSCHLAGEINHEIT MIT EINEM VERSTELLBAREN ANSCHLAG EINER BEARBEITUNGSMASCHINE, SOWIE BEARBEITUNGSMASCHINE**
STOP DEVICE WITH AN ADJUSTABLE STOP FOR A PROCESSING MACHINE AND PROCESSING MACHINE
DISPOSITIF DE SERRAGE AVEC UNE BUTÉE RÉGLABLE D'UNE MACHINE D'USINAGE ET MACHINE D'USINAGE

(30) Priorität: 04.11.2014 DE 102014016631
(43) Veröffentlichungstag der Anmeldung: 18.05.2016
(73) Patentinhaber: Michael Weinig Ag, 97941 Tauberbischofsheim (DE)
(72) Erfinder: MARQUARDT, Heramnn, 97980 Bad Mergentheim (DE); RAPP, Walter, 97953 Königheim-Gissigheim (DE); WAGNER, Ralf, 74736 Hardheim (DE)
(74) Vertreter: Jackisch-Kohl, Anna-Katharina

(56) Entgegenhaltungen:
- AT-B- 263 335
- CA-A1- 2 444 371
- DE-A1- 3 421 430
- DE-A1-102006 019 115
- GB-A- 572 322
- JP-A- 2003 127 107
- US-A- 2 080 563
- US-A- 4 469 318
- US-A- 5 018 562
- US-A1- 2006 201 297
- US-B1- 7 341 081

## Beschreibung

Die Erfindung betrifft eine Anschlageinheit mit einem verstellbaren Anschlag und mit einer Klemmvorrichtung gemäß dem Oberbegriff des Anspruchs 1. Eine solche Anschlageinheit ist aus dem Dokument DE102006019115A1 bekannt. Es ist bei Bearbeitungsmaschinen, insbesondere bei Kehlmaschinen, bekannt, die Werkstücke für eine Bearbeitung an Werkzeugen vorbeizuführen. Hierbei liegen die Werkstücke an einem Anschlag an. Er muss in Bezug auf den Flugkreisdurchmesser des zugeordneten Werkzeuges genau positioniert werden, um eine exakte Führung des Werkstückes durch die Bearbeitungsmaschine zu gewährleisten. Richtig eingestellte Anschläge sind mitentscheidend für die Qualität der bearbeiteten Werkstücke. Der Anschlag ist in der Bearbeitungsmaschine mechanisch über Schrauben geklemmt. Häufig müssen Werkzeuge gewechselt werden, je nach Bearbeitungsaufgabe am Werkstück. Die Werkzeuge haben häufig unterschiedliche Flugkreisdurchmesser und Kehltiefen, so dass es notwendig ist, den Anschlag in Bezug auf die unterschiedlichen Flugkreisdurchmesser der Werkzeuge einzustellen. Hierzu werden die Schrauben gelöst, die nur von der Anschlagrückseite her schwer zugänglich sind und zum Teil eine Verstellung der Maschineneinstellung oder das Entfernen anderer Maschinenteile erforderlich machen. Außerdem ist durch die schlechte Zugänglichkeit ein Verletzungsrisiko für den Maschinenbediener nicht auszuschließen.

Der Erfindung liegt die Aufgabe zugrunde, die gattungsgemäße Anschlageinheit mit einem verstellbaren Anschlag sowie die Bearbeitungsmaschine so auszubilden, dass eine konstruktiv einfache Klemmung des Anschlags möglich ist, wobei die Klemmung bei Bedarf auch einfach und gefahrlos aufgehoben werden kann.

Diese Aufgabe wird bei der gattungsgemäßen Klemmvorrichtung erfindungsgemäß mit den kennzeichnenden Merkmalen des Anspruches 1 und bei der Bearbeitungsmaschine erfindungsgemäß mit den Merkmalen des Anspruches 17 gelöst.

Die erfindungsgemäße Anschlageinheit mit einem verstellbaren Anschlag hat das Übertragungselement, mit dem das Klemmteil betätigt werden kann. Auf das Übertragungselement wirkt eine Kraft, die durch das Übertragungselement so umgesetzt wird, dass auf das Klemmteil die Klemmkraft wirkt. Die Klemmkraft, die auf das Klemmteil wirkt, kann somit rein mechanisch hergestellt werden. Das Lösen der Klemmung erfolgt durch eine Löseeinheit.

Vorteilhaft ist das Übertragungselement ein zweiarmiger Hebel, auf dessen einen Arm die Kraft in Form einer Druckkraft wirkt und dessen anderer Arm die Klemmkraft erzeugt. Die Klemmkraft ist dann der Druckkraft entgegengerichtet. Der zweiarmige Hebel ist ein einfaches konstruktives Bauelement, das über die Hebelwirkung bei geringer Druckkraft eine hohe Klemmkraft erzeugen kann.

Bei einer vorteilhaften Ausführungsform wird die Kraft durch wenigstens eine Druckfeder erzeugt, die auf einer im Gegenanschlag befestigten Achse angeordnet ist. Die Druckfeder ist ein kostengünstiges Bauteil, das einfach montiert und bei Bedarf auch demontiert werden kann. Die Druckfeder ist insbesondere ein auch nach langer Einsatzdauer zuverlässiges, sicheres Bauteil.

Das Klemmteil sitzt vorteilhaft auf einem Ende eines Stößels, der den entsprechenden Arm des Hebels und den Gegenanschlag durchsetzt. Dieser Stößel erstreckt sich quer zur Verstellrichtung des Anschlages.

Vorteilhaft liegt der Gegenanschlag zwischen dem Anschlag und dem Übertragungselement.

Damit der Stößel das Klemmteil betätigen kann, durchsetzen die Achse, auf der die Druckfeder angeordnet ist, und der Stößel das Übertragungselement mit Spiel. Die Achse und der Stößel liegen vorteilhaft parallel zueinander und somit senkrecht zur Verstellrichtung des Anschlages. Die entsprechenden Öffnungen im Übertragungselement haben größeren Durchmesser als die Achse und der Stößel, so dass das Übertragungselement einfach gegenüber dem Stößel und der Achse verstellt werden kann.

Bei einer bevorzugten Ausbildung ist der Stößel an dem vom Klemmteil abgewandten Ende mit einem Widerlager versehen. Mit ihm stützt sich der Stößel an der vom Gegenanschlag abgewandten Außenseite des Übertragungselementes ab. Das Widerlager und das Klemmteil liegen somit auf unterschiedlichen Seiten des Gegenanschlages, gegen den der Anschlag nach seiner Verstellung verklemmt wird.

Eine wirksame Klemmung ergibt sich, wenn das Klemmteil ein Nutenstein ist, der in einer T-Nut im Anschlag liegt. Da sich die T-Nut in Verstellrichtung des Anschlages erstreckt, lässt sich der Anschlag problemlos in Verstellrichtung so verschieben, dass er den erforderlichen Abstand vom Flugkreisdurchmesser des zugehörigen Werkzeuges hat. Die Verstellrichtung des Anschlages liegt parallel zur Transportrichtung, in der die Werkstücke für die Bearbeitung durch die Bearbeitungsmaschine transportiert werden.

In der Klemmstellung zieht das Klemmteil vorteilhaft unter der Klemmkraft den Anschlag gegen den Gegenanschlag.

Bei einer vorteilhaften Ausführungsform weist das Widerlager eine Kegelpfanne sowie eine mit ihr zusammenwirkende Kegelscheibe auf. Dadurch wird erreicht, dass das Übertragungselement beim Lösen der Klemmung und umgekehrt auch zum Erzeugen der Klemmkraft relativ gegenüber dem Stößel geschwenkt werden kann. Die Kegelpfanne und die Kegelscheibe bilden eine Art Kugelgelenk, durch die gewährleistet ist, dass trotz Schrägstellung des Übertragungselementes der Stößel stets in Richtung seiner Längsachse belastet und verstellt werden kann.

Damit die auf das Übertragungselement wirkende Kraft gering und die Klemmkraft dennoch hoch ist, ist vorteilhaft vorgesehen, dass der Abstand zwischen der die Druckfeder tragenden Achse und der Schwenkachse des Übertragungselementes größer ist als der Abstand zwischen dem Stößel mit dem Klemmteil und der Schwenkachse. Die Schwenkachse des Übertragungselementes liegt senkrecht zur Verstellrichtung des Anschlages sowie der Transportrichtung der Werkstücke durch die Bearbeitungsmaschine.

Das Übertragungselement wird vorteilhaft durch die Löseeinheit betätigt, insbesondere wenn die Klemmung des Anschlages aufgehoben werden soll.

Damit die Löseeinheit nur eine geringe Kraft zum Lösen der Klemmung aufbringen muss, greift sie vorteilhaft an dem vom Stößel abgewandten Ende des Übertragungselementes an.

Als Löseeinheit kann ein Pneumatikzylinder, aber auch ein Hydraulikzylinder, ein elektrischer oder ein elektromagnetischer Antrieb eingesetzt werden.

Die Löseeinheit wird vorteilhaft mit einem Schalter betätigt. Er ist so an der Kehlmaschine vorgesehen, dass er vom Bediener bequem betätigt werden kann, und befindet sich vorteilhaft im Bereich außerhalb der Werkzeuge und der Transporteinrichtungen der Bearbeitungsmaschine, aber in räumlicher Zuordnung zu dem zu verstellenden Anschlag. Darum kann über den Schalter die Löseeinheit einfach und dennoch zuverlässig von der Bedienperson betätigt werden. Bedienfehler werden vermieden.

Die erfindungsgemäße Bearbeitungsmaschine mit der Klemmvorrichtung ermöglicht eine sehr rasche Einstellung des Anschlages in Bezug auf den Flugkreisdurchmesser und die Kehltiefe des entsprechenden Werkzeuges. Die Klemmkraft wird durch Spannen der mechanischen Druckfeder erzeugt, während die Klemmkraft dadurch gelöst wird, dass mittels einer Löseeinheit das Übertragungselement gegen die Kraft der Druckfeder verschwenkt wird. Die Druckfeder gewährleistet eine stetige Klemmung des Anschlages, solange die Löseeinheit nicht betätigt worden ist.

Der verstellbare Anschlag ist vorteilhaft einem rechten Werkzeug der Bearbeitungsmaschine zugeordnet. Mit diesem rechten Werkzeug wird, insbesondere in einer Kehlmaschine, die in Transportrichtung rechte Längsseite des Werkstückes bei seinem Durchgang durch die Bearbeitungsmaschine bearbeitet. Dabei befindet sich der verstellbare Anschlag in Transportrichtung der Werkstücke durch die Bearbeitungsmaschine hinter dem rechten Werkzeug.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: eine erfindungsgemäße Bearbeitungsmaschine in perspektivischer Darstellung,
- Fig. 2: in perspektivischer Darstellung eine erfindungsgemäße Klemmvorrichtung für einen Anschlag der erfindungsgemäßen Bearbeitungsmaschine,
- Fig. 3: in vergrößerter Darstellung einen Schnitt durch die Klemmvorrichtung gemäß Fig. 2 mit geklemmtem Anschlag,
- Fig. 4: in einer Darstellung entsprechend Fig. 3 den Anschlag in Lösestellung,
- Fig. 5: in vergrößerter Darstellung einen Schnitt längs der Linie A-A in Fig. 3,
- Fig. 6: in vergrößerter Darstellung einen Schnitt längs der Linie B-B in Fig. 3.

Die Bearbeitungsmaschine ist im Ausführungsbeispiel vorteilhaft eine Kehlmaschine, mit der die Werkstücke bei ihrem Durchgang durch die Kehlmaschine an vier Seiten bearbeitet werden können. Die zu bearbeitenden Werkstücke werden über einen Einlauftisch 1 einem Maschinentisch 2 der Kehlmaschine zugeführt. Auf ihm werden die Werkstücke mittels Transportwalzen 3 durch die Kehlmaschine gefördert. Sie hat ein unteres Werkzeug 4, das um eine horizontale Achse drehbar ist und mit dem die Unterseite des Werkstückes beim Durchlauf durch die Kehlmaschine bearbeitet wird. In Transportrichtung 5 hinter dem Werkzeug 4 befindet sich in der Kehlmaschine ein rechtes Werkzeug 6, das um eine vertikale Achse drehbar ist und mit dem die in Transportrichtung 5 rechte Längsseite des Werkstückes beim Durchlauf bearbeitet wird. Die andere Längsseite des Werkstückes wird von einem linken, um eine vertikale Achse drehbaren Werkzeug 7 bearbeitet. Die beiden vertikalen Werkzeuge 6, 7 liegen in Transportrichtung 5 des Werkstückes versetzt zueinander. In Transportrichtung 5 hinter dem linken Werkzeug 7 befindet sich ein oberes Werkzeug 8, das um eine horizontale Achse drehbar ist und mit dem die Oberseite des Werkstückes bei dessen Durchlauf durch die Kehlmaschine bearbeitet wird. In Transportrichtung 5 hinter dem oberen Werkzeug 8 ist die Kehlmaschine mit einem unteren Werkzeug 9 versehen, das ebenfalls um eine horizontale Achse drehbar ist und mit dem die Unterseite des Werkstückes nochmals bearbeitet wird. Je nach Anwendungsfall kann die Kehlmaschine weitere rechte, linke, obere oder untere Spindeln aufweisen. Während des Durchlaufes durch die Kehlmaschine liegt das Werkstück mit seiner in Transportrichtung 5 rechten Längsseite an Anschlägen 10 an.

Diese bestehen aus einem dem linken Werkzeug 7 gegenüberliegenden Anschlag 11, der starr angeordnet ist, und aus einem Anschlag 12, der sich in Transportrichtung 5 hinter dem rechten Werkzeug 6 befindet und bei Bedarf zum Flugkreis dieses rechten Werkzeuges 6 in Transportrichtung 5 eingestellt werden kann.

Die Transportwalzen 3 sind über Vorschubpendel 13 mit Pendelhaltern 14 verbunden, die an einem Transportbalken 15 befestigt sind. Er erstreckt sich in Transportrichtung 5 im Bereich oberhalb des Maschinentisches 2. Mit Hilfe von Druckzylindern 16, die an den Pendelhaltern 14 gelagert sind und an den Vorschubpendeln 13 angreifen, werden die Transportwalzen 3 gegen die Werkstück gedrückt, wenn diese durch Kehlmaschine transportiert werden sollen.

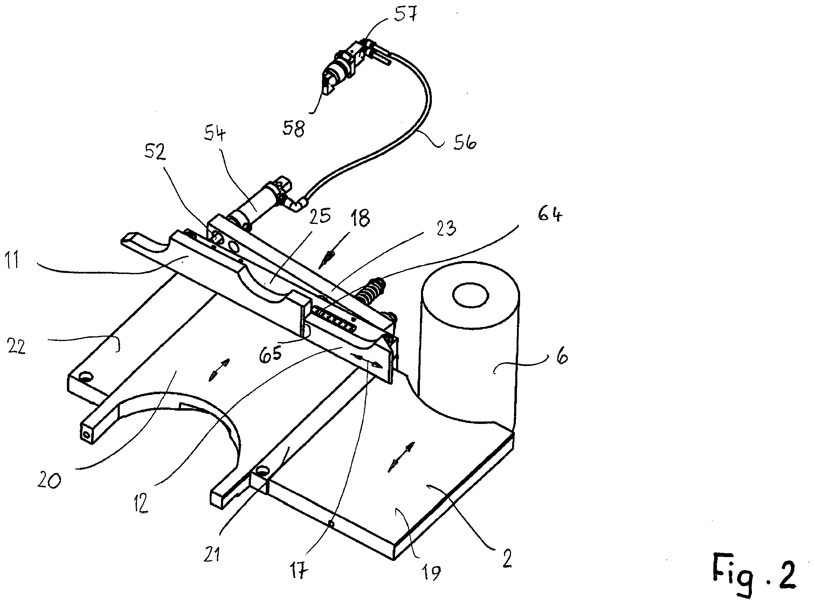

Die Position des Anschlages 12 richtet sich nach dem Flugkreisdurchmesser und der Kehltiefe des rechten Werkzeuges 6. Wird ein Werkzeug mit einem anderen Flugkreisdurchmesser eingesetzt oder ändert sich der Abstand zwischen dem Anschlag 12 und dem Flugkreisdurchmesser, hervorgerufen durch die Position des Werkzeuges 6 quer zur Transportrichtung 5 des Werkstückes und des Anschlags 12 aufgrund einer Profilierung mit entsprechender Kehltiefe, muss der Anschlag 12 in Transportrichtung 3 in Bezug auf dieses Werkzeug neu eingestellt werden. Beim Geradehobeln steht der Flugkreis direkt in Flucht zu dem Anschlag nach der rechten Spindel 6. Die Verstellung des Anschlages 12 beschränkt sich bei der Änderung des Flugkreisdurchmessers des Werkzeuges auf einen relativ kleinen Weg. Wird das Werkstück an der rechten Seite profiliert, was zum Teil auf der ersten rechten Spindel 6, der sogenannten Fügespindel, vor allem auf der 2. rechten Spindel der Fall ist, stehen die Schneiden mit ihrer Kehltiefe über den Anschlag 12 vor. Die Position des Anschlages 12 richtet sich hierbei nicht nur nach dem Flugkreisdurchmesser des Werkzeuges, sondern auch nach dem Maß, um das die Schneiden vorstehen und welches der Kehltiefe (Profiliertiefe) entspricht. Insbesondere beim Wechsel von Geradehobeln zu Profilieren ist daher eine Verstellung des Anschlags12 notwendig. In Fig. 2 ist durch den Doppelpfeil 17 die Verstellrichtung des Anschlages 12 angegeben, die parallel zur Transportrichtung 5 liegt. In der Arbeitsstellung ist der Anschlag 12 festgeklemmt, so dass er sich nicht relativ zum Werkzeug 6 unbeabsichtigt verstellen kann. Dies wird durch eine Klemmvorrichtung 18 erreicht, die anhand der nachfolgenden Figuren im Einzelnen beschrieben werden wird.

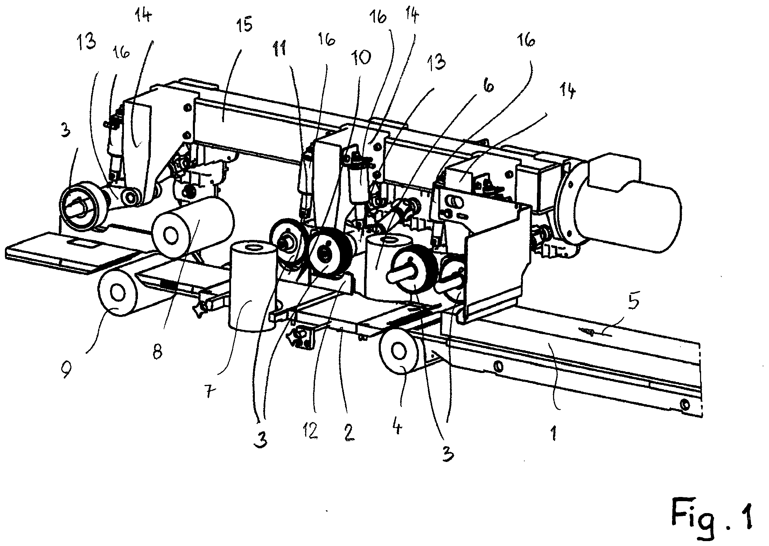

Fig. 2 zeigt zwei dem rechten Werkzeug 6 sowie dem linken Werkzeug 7 (Fig. 1) zugeordnete Tischplatten 19, 20, die jeweils senkrecht zur Transportrichtung 5 in Bezug auf das zugehörige Werkzeug 6, 7 einstellbar sind. Zwischen den beiden Tischplatten 19, 20 befindet sich eine maschinenfeste Führungsleiste 21, an der die Tischplatten 19, 20 mit ihren einander zugewandten Längsseiten geführt sind. Die Führungsleiste 21 ist vorteilhaft auf den (nicht dargestellten) Maschinenständer geschraubt.

Die Tischplatte 20 ist an ihrer gegenüberliegenden Längsseite an einer weiteren maschinenfesten Führungsleiste 22 quer zur Transportrichtung 5 bei der Verstellung geführt. Auch in Transportrichtung 5 vor der Tischplatte 19 befindet sich eine Führungsleiste oder eine weitere Tischplatte.

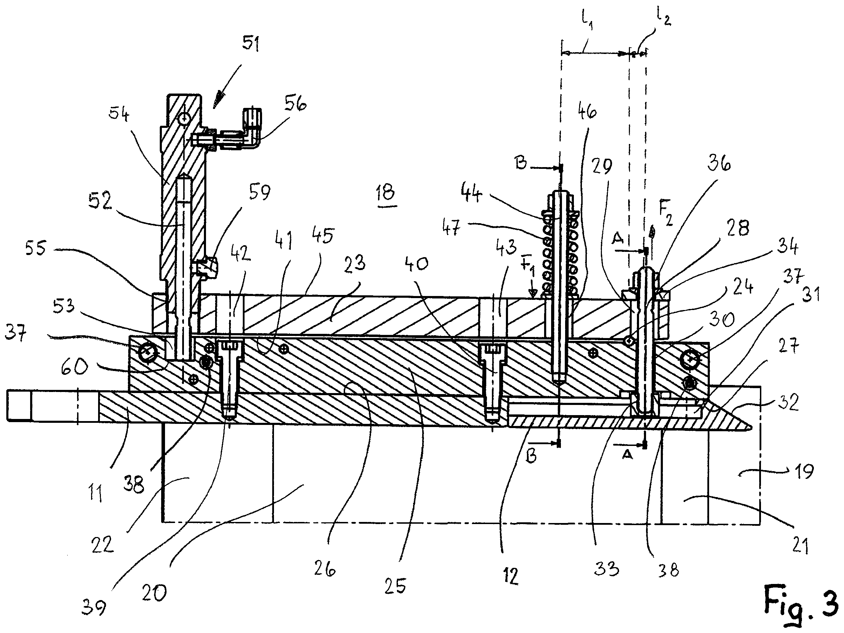

Der verstellbare Anschlag 12 ist in der Arbeitsstellung (Fig. 3) durch die Klemmvorrichtung 18 geklemmt. Sie hat einen Hebel 23, der um eine vertikale Achse 24 schwenkbar bzw. kippbar ist. Die Achse 24 ist vorteilhaft durch einen Zylinderstift gebildet, der zwischen dem Hebel 23 und einem Anschlagträger 25 angeordnet ist. Vorteilhaft ist er in jeweils eine Nut im Hebel 23 und im Anschlagträger 25, welche nach unten und oben begrenzt ist, eingelegt, so dass er nach erfolgter Montage nicht herausfallen kann. Die Anschläge 11, 12 liegen mit ihren vom linken Werkzeug 7 abgewandten Rückseiten 26, 27 flächig am Anschlagträger 25 an. Die Anschläge 11, 12 erstrecken sich senkrecht zum Maschinentisch 2 bzw. den Tischplatten 19, 20. Der Anschlagträger 25 hat etwa quadratischen Querschnitt und ist vorteilhaft niedriger als die Anschläge 11, 12.

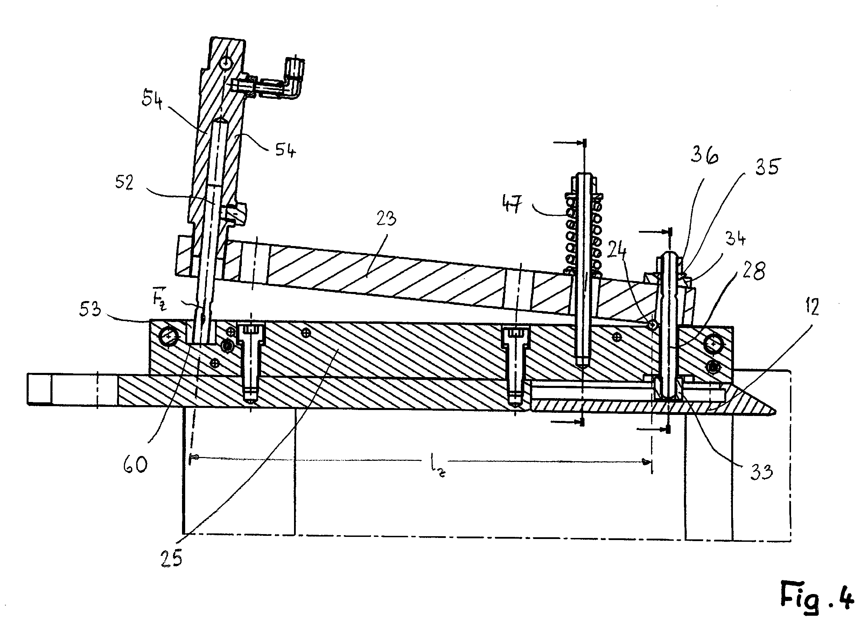

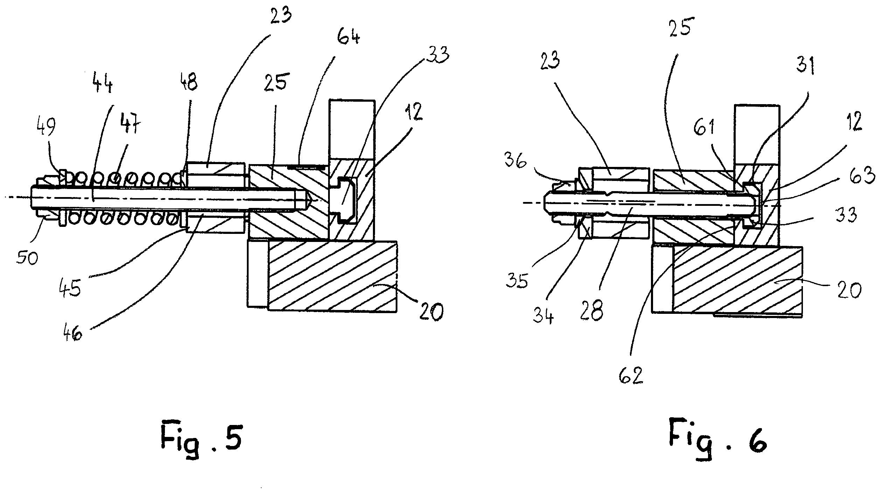

Die Achse 24 befindet sich im Bereich des verstellbaren Anschlages 12 nahe seinem Ende. In diesem Endbereich wird der Hebel 23 von einem Stehbolzen 28 mit Spiel durchsetzt. Das Spiel ist so groß bemessen, dass es möglich ist, den Hebel 23 gegenüber dem Anschlagträger 25 zu verschwenken (Fig. 4). Der Stehbolzen 28 durchsetzt auch den Anschlagträger 25, der mit einer entsprechenden Durchgangsöffnung 30 versehen ist. Damit der Stehbolzen 28 darin leicht axial verschiebbar ist, ist der Durchmesser geringfügig größer als der Durchmesser des Stehbolzens 28. Er ragt in eine T-Nut 31 (Fig. 3 und 6), die in der Rückseite 27 des verschiebbaren Anschlages 12 vorgesehen ist. Die T-Nut erstreckt sich von der am Anschlag 11 anliegenden Seite aus bis nahe an die gegenüberliegende Stirnseite 32 des Anschlages 12. Auf dem in die T-Nut ragenden Ende des Stehbolzens 28 sitzt ein Nutenstein 33, der in der T-Nut gehalten ist und gegenüber dem der Anschlag 12 in Verstellrichtung 17 verschiebbar ist.

Auf dem anderen, über den Hebel 23 vorstehenden Ende des Stehbolzens 28 sitzt eine Kegelpfanne 34, in die eine Kegelscheibe 35 eingreift (Fig. 5). Sie wird mittels einer auf das freie Ende des Stehbolzens 28 geschraubten Mutter 36, die vorzugsweise selbstsichernd ausgebildet ist, in Anlage an der Kegelpfanne 34 gehalten. Durch diese Anordnung ist immer ein Flächenkontakt unabhängig von der Schwenk- bzw. Kippbewegung des Hebels 23 gegeben. Auch die Kegelpfanne 34 hat einen gegenüber dem Stehbolzen 23 ausreichend großen Durchmesser, so dass sich Kegelpfanne 34 und Stehbolzen 23 bei der Schwenkbewegung des Hebels 23 und der daran anliegenden Kegelpfanne 34 nicht gegeneinander verklemmen.

Der Anschlagträger 25 ist mittels Schrauben 37 und Stiften 38 (Fig. 3) auf der Führungsleiste 21 bzw. dem Maschinenständer verschraubt und verstiftet. Der starre Anschlag 11 ist mit Schrauben 39, 40 am Anschlagträger 25 befestigt. Die Schrauben 39, 40 sind in die Rückseite 26 des festen Anschlages 11 geschraubt. Die Schraubenköpfe liegen vorteilhaft vertieft in der vom Anschlag 11 abgewandten Rückseite 41 des Anschlagträgers 25. Mit Hilfe der Schrauben 39, 40 lässt sich der Anschlag 11 zuverlässig am Anschlagträger 25 befestigen, an dem er flächig anliegt. In Höhe der Schrauben 39, 40 ist der Hebel 23 mit ihn durchsetzenden Öffnungen 42, 43 versehen, durch die ein Werkzeug zum Betätigen der Schrauben 39, 40 gesteckt werden kann.

In die Rückseite 41 des Anschlagträgers 25 ist eine Gewindestange 44 geschraubt, die über die vom Anschlagträger 25 abgewandte Rückseite 45 des Hebels 23 ragt. Die Öffnung 46 im Hebel 23, durch welche die Gewindestange 44 ragt, hat größeren Durchmesser als die Gewindestange 44. Dadurch kann der Hebel 23 in noch zu beschreibenderweise um die Achse 24 gekippt bzw. geschwenkt werden. Der über den Hebel 23 vorstehende Teil der Gewindestange 44 ist von einer Druckfeder 47 umgeben (Fig. 5), die sich mit ihrem einen Ende über eine Scheibe 48 an der Rückseite 45 des Hebels 23 abstützt. Das andere Ende der Druckfeder 37 liegt an einer die Gewindestange 44 umgebenden Scheibe 49 an, die sich an einer Mutter 50 abstützt, die auf das freie Ende der Gewindestange 44 geschraubt ist. Vorzugsweise ist die Mutter 50 selbstsichernd ausgebildet. Mit der Mutter 50 wird die Vorspannkraft der Druckfeder 47 eingestellt. In der in Fig. 3 dargestellten Klemmstellung übt die Druckfeder 47 die Kraft F₁ auf den Hebel 23 aus (Fig. 3).

Wie Fig. 3 zeigt, liegen die Gewindestange 44 und der Stehbolzen 28 auf einander gegenüberliegenden Seiten der Achse 24. Die Achse der Gewindestange 44 hat den Abstand l₁ und die Achse des Stehbolzens 28 den Abstand l₂ von der Achse 24. Dabei ist der Abstand l₁ größer als der Abstand l₂.

In der in Fig. 3 dargestellten Klemmstellung übt der Hebel 23 auf den Stehbolzen 28 über die Kegelpfanne 34, die Kegelscheibe 35 und die Mutter 36 die Kraft F₂ aus. Sie ist der Kraft F₁ entgegengerichtet, weil der Stehbolzen 28 und die Gewindestange 44 mit der Druckfeder 47 auf gegenüberliegenden Seiten der Achse 24 vorgesehen sind.

Eine Löseeinheit 51 hat eine Kolbenstange 52, die mit ihrem freien Ende in eine in der Rückseite 41 des Anschlagträgers 25 vorgesehene Vertiefung 53 eingreift. Sie ist nahe dem dem Stehbolzen 28 sowie der Gewindestange 44 gegenüberliegenden Ende des Anschlagträgers 25 vorgesehen. Die Kolbenstange 52 ist Teil eines Pneumatikzylinders 54, der mit dem Hebel 23 fest verbunden ist. Vorzugsweise ist der Pneumatikzylinder 54 in eine Gewindebohrung 55 des Hebels 23 geschraubt. An den Pneumatikzylinder 54 ist eine Pneumatikleitung 56 angeschlossen. Wie sich aus Fig. 2 ergibt, ist der Pneumatikzylinder 54 über die Pneumatikleitung 56 an ein Pneumatikventil 57 angeschlossen, das mit einem Schalter 58 betätigt werden kann. Der Schalter 58 ist so an der Kehlmaschine vorgesehen, dass er vom Bediener bequem betätigt werden kann. Der Pneumatikzylinder 54 ist auf der dem Anschluss mit der Pneumatikleitung 56 gegenüberliegenden Kolbenseite mit einem Auslass 59 versehen, durch den die Luft beim Ausfahren des Pneumatikzylinders 54 auf der Kolbenstangenseite entweichen und beim Einfahren einströmen kann. Der Auslass 59 ist vorteilhaft mit einem Schalldämpfer versehen.

Als Pneumatikzylinder kann auch ein beidseitig beaufschlagbarer Pneumatikzylinder verwendet werden.

In der Klemmstellung gemäß Fig. 3 ist der Pneumatikzylinder 54 eingefahren, so dass die Kolbenstange 52 nur wenig über den Pneumatikzylinder 54 vorsteht. Unter der Kraft der Druckfeder 47 ist der Hebel 23 in der Darstellung gemäß Fig. 3 entgegen dem Uhrzeigersinn in Richtung auf den Anschlagträger 25 belastet. Die Kolbenstange 52 liegt am Boden 60 der Vertiefung 53 an. Da sich der Stehbolzen 28 auf der von der Gewindestange 44 abgewandten Seite der Achse 24 befindet, wird durch den Hebel 23 der Stehbolzen 28 nach außen geschoben bzw. belastet. Dies hat zur Folge, dass der Nutenstein 33 fest gegen die dem Anschlagträger 25 zugewandte Wand 61 (Fig. 6) der T-Nut 31 gedrückt wird. Dadurch wird der Anschlag 12 mit hoher Kraft gegen die Vorderseite 62 des Anschlagträgers 25 gedrückt und damit arretiert.

Die Klemmung des Anschlages 12 erfolgt somit ausschließlich über die Kraft der Druckfeder 47. In der Klemmstellung gilt die Beziehung F₁ x l₁ = F₂ x l₂. Daraus ergibt sich F₂ = F₁ x l₁/l₂ Unter Berücksichtigung, dass der Abstand l₁ größer ist als der Abstand l₂, ergibt sich, dass die Kraft F₂, mit der der Stehbolzen 28 den Nutenstein 33 gegen die Wand 61 der T-Nut 31 zieht, größer ist als die Kraft F₁, die von der Druckfeder 47 auf den Hebel 23 ausgeübt wird.

Durch das Abstandsverhältnis kann die Kraft F₂ entsprechend hoch eingestellt werden.

Die vom Pneumatikzylinder 54 ausgeübte Kraft F_{z} (Fig. 4) ist verhältnismäßig gering. Aus der Beziehung F_{z} x l_{z} = F₁ x l₁ ergibt sich F_{z} = F₁ x l₁/l_{z}. Da der Hebelarm l_{z} (entspricht dem Abstand zwischen der Achse 24 und der Achse der Kolbenstange 52) wesentlich größer ist als der Hebelarm l₁, ergibt sich hieraus, dass die Kraft F_{z} wesentlich kleiner ist als die Kraft F₁. Wie zuvor angegeben, ist die Kraft F₁, die von der Druckfeder 47 auf den Hebel 23 ausgeübt wird, wesentlich kleiner als die vom Stehbolzen 28 ausgeübte Klemmkraft F₂, so dass die Klemmung mit der notwendigen hohen Klemmkraft durch eine verhältnismäßig geringe Lösekraft aufgehoben werden kann.

Soll der Anschlag 12 in Verstellrichtung 17 verstellt werden, wird durch Betätigen des Schalters 58 der Pneumatikzylinder 54 ausgefahren (Fig. 4). Die Kolbenstange 52 stützt sich stets am Boden 60 der Vertiefung 53 des Anschlagträgers 25 ab. Hierfür sorgt die Druckfeder 47, die den Hebel 23 stets in Schwenkrichtung entgegen dem Uhrzeigersinn belastet. Da der Pneumatikzylinder 54 fest mit dem Hebel 23 verbunden ist, wird der Hebel 23 um die Achse 24 nunmehr im Uhrzeigersinn geschwenkt. Dadurch wird der Stehbolzen 28 von der Kraft F₂ entlastet und kann zusammen mit dem Nutenstein 33 in Richtung auf den Boden 63 der T-Nut 31 verschoben werden. Dadurch wird die Klemmung des Anschlages 12 aufgehoben, und es ergibt sich das notwendige Spiel zwischen dem Anschlag 12 und dem Anschlagträger 25 sowie zwischen dem Nutenstein 33 und der T-Nut 31, so dass der Anschlag 12 nunmehr relativ zum Anschlagträger 25 in die neue Lage in Verstellrichtung 17 verschoben werden kann. Sobald die gewünschte Stellung des Anschlages 12 erreicht ist, wird mittels des Schalters 58 das Ventil 57 umgeschaltet, so dass der Pneumatikzylinder 54 wieder in die Ausgangslage gemäß Fig. 3 zurückbewegt wird. Dies wird dadurch erreicht, dass der Hebel 23 unter der Kraft der Druckfeder 47 zurückgeschwenkt wird, wodurch die Kolbenstange 52 des Pneumatikzylinders 54 zurückgeschoben wird. Dabei kann das Pneumatikmedium im Pneumatikzylinder 54 über die Pneumatikleitung 56 und das Ventil 57 entweichen. Über den Stehbolzen 28, der sich am Hebel 23 in der beschriebenen Weise abstützt, wird der Nutenstein 33 wieder mit hoher Kraft gegen die Wand 61 der T-Nut 31 gezogen. Der Anschlag 12 ist dann fest am Anschlagträger 25 verklemmt.

Der Anschlag 12 wird in der beschriebenen Weise mechanisch geklemmt, indem die von der Druckfeder 47 ausgeübte Kraft F₂ über eine Hebelübersetzung in eine hohe Klemmkraft umgesetzt wird, die auf den verstellbaren Anschlag 12 wirkt. Die Löseeinheit 51 mit dem Pneumatikzylinder 54 dient lediglich zum Lösen der Klemmung, indem der Hebel 23 gegen die Kraft der Druckfeder 47 verschwenkt wird. Dies hat zur Folge, dass nunmehr der Stehbolzen 28 mit dem Nutenstein 33 in die Lösestellung verschoben wird, wodurch die Klemmung des Anschlages 12 aufgehoben wird. Der Anschlag 12 kann nunmehr in Transportrichtung 5 bzw. in Verstellrichtung 17 in die gewünschte Lage relativ zum Werkzeug 6 eingestellt werden. Um eine exakte Einstellung zu ermöglichen, ist am Anschlagträger 25 ein Maßstab 64 vorgesehen, dem eine dem festen Anschlag 11 zugewandte Stirnseite 65 des Anschlages 12 zugeordnet ist.

Mittels des Schalters 58 kann die Bedienperson einfach die Klemmung des Anschlages 12 aufheben. Die Druckfeder 47 gewährleistet eine sichere Verspannung des Anschlages 12. Da die Bedienperson lediglich den Schalter 58 betätigen muss, ergibt sich ein hoher Bedienkomfort. Insbesondere werden Bedienfehler vermieden. Es sind keine zusätzlichen Werkzeuge erforderlich, mittels derer der Anschlag 12 an schwer zugänglichen Stellen zu lösen ist und die in der Praxis häufig verlegt und nicht schnell griffbereit sind. Da der Anschlag 12 einfach an den Flugkreisdurchmesser des Werkzeuges 6 angepasst werden kann, ist für eine hohe Bearbeitungsqualität der Werkstücke gesorgt.

Anstelle des Pneumatikantriebes zum Lösen der Klemmung kann auch jeder andere geeignete Antrieb eingesetzt werden, wie ein Hydraulikantrieb, ein elektrischer oder elektromagnetischer Antrieb.

Beim beschriebenen Ausführungsbeispiel ist der Hebel 23 ein zweiarmiger Hebel. Darum sind die Druckkraft F₁ und die Klemmkraft F₂ einander entgegengerichtet. Der Hebel 23 kann aber auch als einarmiger Hebel ausgebildet sein. Dann liegt die Achse 24 auf der von der Gewindestange 44 abgewandten Seite des Stehbolzens 28. Die Abstande l₁ und l₂ sind auch in diesem Fall derart unterschiedlich, dass der Abstand l₁ größer ist als der Abstand l₂. Die kraft F₁ und die Klemmkraft F₂ wirken bei einer solchen Hebelausbildung in gleicher Richtung. Bei einer solchen Ausbildung würde die Klemmkraft F₂ beim Schwenken des Hebels 23 im Uhrzeigersinn aufgebracht, d.h. die Kraft F₁, muss in entgegengesetzter Richtung wirken als im beschriebenen Ausführungsbeispiel. Die Löseeinheit 51 muss dann zum Lösen der Klemmung den Hebel 23 entgegen dem Uhrzeigersinn schwenken.

Die Kraft F₁ kann jeweils in Form einer Druckkraft, aber auch als Zugkraft auf den Hebel 23 aufgebracht werden.

## Patentansprüche

1. Anschlageinheit mit einem verstellbaren Anschlag (12) einer Bearbeitungsmaschine, insbesondere einer Kehlmaschine, zur Führung von Werkstücken durch die Bearbeitungsmaschine und mit einer Klemmvorrichtung, die wenigstens ein Klemmteil (33) aufweist, mit dem der Anschlag (12) gegen wenigstens einen Gegenanschlag (25) klemmbar ist, **dadurch gekennzeichnet, dass** das Klemmteil (33) an einem Übertragungselement (23) vorgesehen ist, auf das eine Federkraft (F₁) wirkt, die in eine auf das Klemmteil (33) wirkende Klemmkraft (F₂) umgesetzt wird, und dass zum Aufheben der Klemmung eine Löseeinheit (51) als Teil der Anschlageinheit vorgesehen ist.

2. Anschlageinheit nach Anspruch 1,
**dadurch gekennzeichnet, dass** das Übertragungselement (23) ein zweiarmiger Hebel ist, auf dessen einen Arm die Kraft (F₁) in Form einer Druckkraft wirkt und dessen anderer Arm die Klemmkraft (F₂) erzeugt.

3. Anschlageinheit nach Anspruch 1 oder 2,
**dadurch gekennzeichnet, dass** die Druckkraft (F₁) durch wenigstens eine Druckfeder (47) erzeugt wird, die auf einer im Gegenanschlag (25) befestigten Achse (44) angeordnet ist.

4. Anschlageinheit nach Anspruch 2 oder 3,
**dadurch gekennzeichnet, dass** der andere Arm des Hebels (23) und der Gegenanschlag (25) von einem Stößel (28) durchsetzt sind, der an einem Ende mit dem Klemmteil (33) versehen ist.

5. Anschlageinheit nach einem der Ansprüche 1 bis 4,
**dadurch gekennzeichnet, dass** der Gegenanschlag (25) zwischen dem Anschlag (12) und dem Übertragungselement (23) liegt.

6. Anschlageinheit nach einem der Ansprüche 2 bis 5,
**dadurch gekennzeichnet, dass** die Achse (44) und der Stößel (28) das Übertragungselement (23) mit Spiel durchsetzen.

7. Anschlageinheit nach einem der Ansprüche 4 bis 6,
**dadurch gekennzeichnet, dass** der Stößel (28) an dem vom Klemmteil (33) abgewandten Ende mit einem Widerlager (34 bis 36) versehen ist, das sich an der vom Gegenanschlag (25) abgewandten Außenseite (45) des Übertragungselementes (23) abstützt.

8. Anschlageinheit nach einem der Ansprüche 1 bis 7,
**dadurch gekennzeichnet, dass** das Klemmteil (33) ein Nutenstein ist, der in einer T-Nut (31) im Anschlag (12) liegt, die sich in Verstellrichtung (17) des Anschlages (12) erstreckt.

9. Anschlageinheit nach einem der Ansprüche 1 bis 8,
**dadurch gekennzeichnet, dass** das Klemmteil (33) unter der Klemmkraft (F₂) den Anschlag (12) gegen den Gegenanschlag (25) zieht.

10. Anschlageinheit nach einem der Ansprüche 7 bis 9,
**dadurch gekennzeichnet, dass** das Widerlager eine Kegelpfanne (34) und eine mit ihr zusammenwirkende Kegelscheibe (35) aufweist, von denen sich die Kegelpfanne (34) an der vom Gegenanschlag (25) abgewandten Außenseite (45) des Übertragungselementes (23) abstützt.

11. Anschlageinheit nach einem der Ansprüche 3 bis 10,
**dadurch gekennzeichnet, dass** der Abstand (l₁) zwischen der Achse (44) und der Schwenkachse (24) des Übertragungselementes (23) größer ist als der Abstand (l₂) zwischen dem Stößel (28) und der Schwenkachse (24).

12. Anschlageinheit nach einem der Ansprüche 1 bis 11,
**dadurch gekennzeichnet, dass** das Übertragungselement (23) zum Lösen der Klemmung mittels der Löseeinheit (51) betätigbar ist.

13. Anschlageinheit nach Anspruch 12,
**dadurch gekennzeichnet, dass** die Löseeinheit (51) an dem vom Stößel (28) abgewandten Ende des Übertragungselementes (23) angreift.

14. Anschlageinheit nach Anspruch 12 oder 13,
**dadurch gekennzeichnet, dass** die Löseeinheit (51) mit einem Schalter (58) betätigbar ist.

15. Anschlageinheit nach einem der Ansprüche 1 bis 14,
**dadurch gekennzeichnet, dass** die Löseeinheit (51) mit Energie versorgt wird.

16. Anschlageinheit nach Anspruch 15,
**dadurch gekennzeichnet, dass** die Löseeinheit (51) pneumatisch, hydraulisch, elektrisch oder elektromagnetisch betätigt wird.

17. Bearbeitüngsmaschine, insbesondere Kehlmaschine, mit einer Anschlageinheit nach einem der Ansprüche 1 bis 16.

18. Bearbeitungsmaschine nach Anspruch 17,
**dadurch gekennzeichnet, dass** der verstellbare Anschlag (12) einem rechten Werkzeug (6) der Bearbeitungsmaschine zugeordnet ist, insbesondere in Transportrichtung (5) der Werkstücke durch die Bearbeitungsmaschine hinter dem rechten Werkzeug (6) angeordnet ist.

## Claims

1. A stop device with an adjustable stop (12) of a processing machine, in particular a moulding machine, for guiding workpieces through the processing machine, and comprising a clamping device which has at least one clamping part (33), by means of which the stop (12) can be clamped against at least one counter stop (25), **characterized in that** the clamping part (33) is provided on a transmission element (23), upon which a spring force (F₁) acts, which spring force is converted into a clamping force (F₂) acting upon the clamping part (33), and **in that** a release unit (51) is provided as part of the stop device for releasing the clamping action.

2. The stop device according to claim 1,
**characterized in that** the transmission element (23) is a two-armed lever, one arm of which is acted upon with the force (F₁) in the form of a compressive force and the other arm of which generates the clamping force (F₂).

3. The stop device according to claim 1 or 2,
**characterized in that** the compressive force (F₁) is generated by at least one compression spring (47) that is arranged on an axis (44) fastened in the counter stop (25).

4. The stop device according to claim 2 or 3,
**characterized in that** the other arm of the lever (23) and the counter stop (25) are penetrated by a ram (28) that is provided with the clamping part (33) on one end.

5. The stop device according to one of claims 1 to 4,
**characterized in that** the counter stop (25) lies between the stop (12) and the transmission element (23) .

6. The stop device according to one of claims 2 to 5,
**characterized in that** the axis (44) and the ram (28) penetrate the transmission element (23) with a certain clearance.

7. The stop device according to one of claims 4 to 6,
**characterized in that** the ram (28) is provided, on the end facing away from the clamping part (33), with a counter bearing (34 to 36) that is supported on the outer side (45) of the transmission element (23) facing away from the counter stop (25).

8. The stop device according to one of claims 1 to 7,
**characterized in that** the clamping part (33) is a sliding block that lies in a T-groove (31) in the stop (12) which T-groove extends in the adjusting direction (17) of the stop (12).

9. The stop device according to one of claims 1 to 8,
**characterized in that** the clamping part (33) pulls the stop (12) against the counter stop (25) under the clamping force (F₂).

10. The stop device according to one of claims 7 to 9,
**characterized in that** the counter bearing comprises a conical socket (34) and a taper disc (35) cooperating therewith, from which the conical socket (34) is supported on the outer side (45) of the transmission element (23) facing away from the counter stop (25).

11. The stop device according to one of claims 3 to 10,
**characterized in that** the distance (l₁) between the axis (44) and the pivot axis (24) of the transmission element (23) is greater than the distance (l₂) between the ram (28) and the pivot axis (24).

12. The stop device according to one of claims 1 to 11,
**characterized in that** the transmission element (23) can be actuated by means of the release unit (51) in order to release the clamping.

13. The stop device according to claim 12,
**characterized in that** the release unit (51) acts at the end of the transmission element (23) facing away from the ram (28).

14. The stop device according to claim 12 or 13,
**characterized in that** the release unit (51) can be actuated with a switch (58).

15. The stop device according to one of claims 1 to 14,
**characterized in that** the release unit (51) is supplied with energy.

16. The stop device according to claim 15,
**characterized in that** the release unit (51) is actuated pneumatically, hydraulically, electrically or electromagnetically.

17. A processing machine, in particular a moulding machine, comprising a stop device according to one of claims 1 to 16.

18. The processing machine according to claim 17,
**characterized in that** the adjustable stop (12) is assigned to a right tool (6) of the processing machine, in particular is arranged downstream of the right tool (6) in the transport direction (5) of the workpieces through the processing machine.

## Revendications

1. Unité formant butée, pourvue d'une butée (12) réglable d'une machine d'usinage, notamment d'une moulurière, destinée à guider des pièces d'usinage à travers la machine d'usinage et d'un dispositif de serrage, qui comporte au moins une pièce de serrage (33) par laquelle la butée (12) est susceptible d'être serrée contre au moins une contre-butée (25), **caractérisée en ce que** la pièce de serrage (33) est prévue sur un élément de transmission (23) sur lequel agit une force de ressort (F₁) qui est convertie en une force de serrage (F₂) agissant sur la pièce de serrage (33) et **en ce que** pour annuler le serrage, une unité de désolidarisation (51) est prévue en tant que partie de l'unité formant butée.

2. Unité formant butée selon la revendication 1,
**caractérisée en ce que** l'élément de transmission (23) est un levier à deux bras, sur l'un des bras duquel la force (F₁) agit sous la forme d'une force de pression et dont l'autre bras génère la force de serrage (F₂).

3. Unité formant butée selon la revendication 1 ou 2,
**caractérisée en ce que** la force de pression (F₁) est générée par au moins un ressort de pression (47) qui est placé sur un axe (44) fixé dans la contre-butée (25).

4. Unité formant butée selon la revendication 2 ou 3,
**caractérisée en ce que** l'autre bras du levier (23) et la contre-butée (25) sont traversés par un poussoir (28) qui sur une extrémité est muni de la pièce de serrage (33).

5. Unité formant butée selon l'une quelconque des revendications 1 à 4,
**caractérisée en ce que** la contre-butée (25) se situe entre la butée (12) et l'élément de transmission (23).

6. Unité formant butée selon l'une quelconque des revendications 2 à 5,
**caractérisée en ce que** l'axe (44) et le poussoir (28) traversent l'élément de transmission (23) avec un jeu.

7. Unité formant butée selon l'une quelconque des revendications 4 à 6,
**caractérisée en ce que** sur l'extrémité opposée à la pièce de serrage (33), le poussoir (28) est muni d'un contre-appui (34 à 36) qui s'appuie sur la face extérieure (45) opposée à la contre-butée (25) de l'élément de transmission (23).

8. Unité formant butée selon l'une quelconque des revendications 1 à 7,
**caractérisée en ce que** la pièce de serrage (33) est un coulisseau, qui se situe dans une rainure en forme de T (31) dans la butée (12), laquelle s'étend dans la direction d'ajustage (17) de la butée (12).

9. Unité formant butée selon l'une quelconque des revendications 1 à 8,
**caractérisée en ce que** sous l'effet de la force de serrage (F₂), la pièce de serrage (33) tire la butée (12) contre la contre-butée (25).

10. Unité formant butée selon l'une quelconque des revendications 7 à 9,
**caractérisée en ce que** le contre-appui comporte un coussinet conique (34) et une poulie conique (35) coopérant avec celui-ci, dont le coussinet conique (34) s'appuie sur la face extérieure (45) opposée à la contre-butée (25) de l'élément de transmission (23).

11. Unité formant butée selon l'une quelconque des revendications 3 à 10,
**caractérisée en ce que** l'écart (l₁) entre l'axe (44) et l'axe de pivotement (24) de l'élément de transmission (23) est supérieur à l'écart (l₂) entre le poussoir (28) et l'axe de pivotement (24).

12. Unité formant butée selon l'une quelconque des revendications 1 à 11,
**caractérisée en ce que** pour désolidariser le serrage, l'élément de transmission (23) est susceptible d'être actionné au moyen de l'unité de désolidarisation (51).

13. Unité formant butée selon la revendication 12, **caractérisée en ce que** l'unité de désolidarisation (51) s'engage sur l'extrémité de l'élément de transmission (23) qui est opposée au poussoir (28).

14. Unité formant butée selon la revendication 12 ou 13,
**caractérisée en ce que** l'unité de désolidarisation (51) est susceptible d'être actionnée au moyen d'un commutateur (58).

15. Unité formant butée selon l'une quelconque des revendications 1 à 14,
**caractérisée en ce que** l'unité de désolidarisation (51) est alimentée en énergie.

16. Unité formant butée selon la revendication 15,
**caractérisée en ce que** l'unité de désolidarisation (51) est actionnée par voie pneumatique, hydraulique, électrique ou électromagnétique.

17. Machine d'usinage, notamment moulurière, pourvue d'une unité formant butée selon l'une quelconque des revendications là 16.

18. Machine d'usinage selon la revendication 17,
**caractérisée en ce que** la butée (12) est associée à un outil (6) de droite de la machine d'usinage, notamment est placée derrière l'outil (6) de droite, dans la direction de transport (5) des pièces à usiner à travers la machine d'usinage.
